# EUROPÄISCHE PATENTSCHRIFT

(11) **EP 2 186 285 B1**
(45) Veröffentlichungstag und Bekanntmachung des Hinweises auf die Patenterteilung: **20.07.2016**
(21) Anmeldenummer: 07802186.2
(22) Anmeldetag: 06.09.2007
(51) Int. Cl.: H04L 29/06, H04L 12/22

(54) **VERFAHREN UND EINRICHTUNG ZUR AUTHENTISIERUNG ÜBERTRAGENER NUTZDATEN**
METHOD AND DEVICE FOR AUTHENTICATING TRANSMITTED USER DATA
PROCÉDÉ ET DISPOSITIF D'AUTHENTIFICATION DE DONNÉES UTILES TRANSFÉRÉES

(43) Veröffentlichungstag der Anmeldung: 19.05.2010
(73) Patentinhaber: Unify GmbH & Co. KG, 81379 München (DE)
(72) Erfinder: BOZIONEK, Bruno, 33178 Borchen (DE); KLAGHOFER, Karl, 81373 München (DE); PRANGE, Holger, 81373 München (DE); SCHNEIDER, Werner, 81245 München (DE); TIETSCH, Michael, 86916 Kaufering (DE)
(74) Vertreter: Fritzsche, Thomas
(86) Internationale Anmeldenummer: PCT/EP2007/007790
(87) Internationale Veröffentlichungsnummer: WO 2009/033492

(56) Entgegenhaltungen:
- US-A1- 2003 167 394
- US-A1- 2005 251 676

## Beschreibung

Die Erfindung betrifft ein Verfahren zum Übertragen von insbesondere Echtzeitanwendungen realisierenden Nutzdaten gemäß dem Oberbegriff des Anspruchs 1 sowie eine Anordnung zum Übertragen von insbesondere Echtzeitanwendungen realisierenden Nutzdaten gemäß dem Oberbegriff des Anspruchs 13.

Die Übertragung echtzeitkritischer Daten über ein Kommunikationsnetz ist bekannt. Eine Anwendung, bei welcher derartige Datenübertragungen anfallen, ist die Voice-over-IP (VoIP) Telefonie, die verstärkt an Bedeutung gewinnt, da die Telefonie zunehmend auf Datennetze, insbesondere das Internet verlagert wird.

Damit einhergehend steigt die Gefahr, dass schädliche Attacken, wie sie in Datennetzen schon seit längerer Zeit zu beobachten sind, auch bei VoIP Verbindungen auftreten. Im Gegensatz zu Attacken auf übliche Datenverbindungen können VoIP-Attacken wegen ihres Real-Time Charakters häufig erst dann sicher erkannt werden, wenn die Nutzdatenverbindung bereits aufgebaut ist. Die damit verbundenen Belästigungen bzw. Schädigungen sind dabei bereits eingetreten.

In US 2003/0167394 A1 ist ein Verschlüsselungsverfahren für Datenpakete beschrieben, bei dem eine Kommunikationsvorrichtung auf der Sendeseite Parameter, welche einen Teil der Eingangsdaten bezeichnen, gemeinsam mit einer Daten sichernden Kommunikationsvorrichtung auf der Empfangsseite über einen Kommunikationskanal nutzt und gemäß der gemeinsam genutzten Parameter selektiv diesen Teil der Eingangsdaten sichert, wonach die Daten in Form von Datenpaketen ausgegeben werden.

Die Aufgabe der Erfindung ist es, ein Verfahren sowie Kommunikationseinrichtung zum Übertragen von insbesondere Echtzeitanwendungen realisierenden Nutzdaten anzugeben, welche die Sicherheit vor Angriffen unberechtigter Dritter auf einfache Weise erhöhen.

Diese Aufgabe wird ausgehend von dem Oberbegriff des Anspruchs 1 durch dessen kennzeichnende Merkmale sowie ausgehend vom Gattungsbegriff des Anspruchs 13 durch dessen kennzeichnende Merkmale gelöst.

Bei dem erfindungsgemäßen Verfahren zum Übertragen von insbesondere Echtzeitanwendungen realisierenden Nutzdaten zwischen zumindest einer ersten Kommunikationseinrichtung und zumindest einer zweiten Kommunikationseinrichtung, wobei die Nutzdaten während einer Kommunikationsverbindung als Datenpakete übertragen werden, wird während der Kommunikationsverbindung zumindest seitens der ersten Kommunikationseinrichtung in zumindest einem der die Nutzdaten übertragenden an die zweite Kommunikationseinrichtung gerichteten Datenpakete zumindest ein eine Authentisierung der ersten Kommunikationseinrichtung ermöglichendes Paket eingebettet.

Ein wesentlicher Vorteil des erfindungsgemäßen Verfahrens besteht darin, dass aufgrund des in die Nutzdaten inkludierten Authentisierungspakets die die Nutzdaten empfangende Kommunikationseinrichtung fortlaufend ermitteln kann, ob es sich bei dem Kommunikationspartner tatsächlich um den bekanntgegebenen Kommunikationspartner handelt. Das Inkludieren in den Nutzdaten hat dabei den Vorteil, dass die Daten ohne Weiteres an die empfangende Kommunikationseinrichtung übermittelt werden, da bis auf etwaige Anforderungen auf Kopfdaten von Nutzdatenpaketen keine Anforderungen auf den Inhalt bestehen. Daher zeichnet sich das erfindungsgemäße Verfahren auch vorteilhaft dadurch aus, dass es in bestehende Systeme einfach implementiert werden kann. Es ist ferner für Systeme geeignet, bei der die Vertrauenswürdigkeit der empfangenden Kommunikationseinrichtung außer Frage steht.

Ergänzend hierzu ist von Vorteil, wenn das Verfahren derart weitergebildet wird, dass während der Kommunikationsverbindung zumindest seitens der zweiten Kommunikationseinrichtung in zumindest einem der die Nutzdaten übertragenden an die erste Kommunikationseinrichtung gerichteten Datenpakete zumindest ein eine Authentisierung der zweiten Kommunikationseinrichtung ermöglichendes Paket eingebettet wird. Hierdurch werden beide Kommunikationsrichtungen auf die erfindungsgemäß vorteilhafte Weise gesichert.

Wird von der ersten und/oder zweiten Kommunikationseinrichtung bei Empfang von Nutzdaten ein Versenden von die Authentisierung ermöglichenden Paketen angefordert, entsteht ein Freiheitsgrad bei der Realisierung des Verfahrens dahingehend, dass beispielsweise erst zu einem späteren zufällig gewählten Zeitpunkt die Authentisierung gefordert wird oder aber es kann vor Anforderung eine Auswertung dahingehend vorgeschaltet werden, ob der sendende Kommunikationspartner überhaupt zu der erfindungsgemäßen Authentisierung in der Lage ist und ggf. alternative Schutzmechanismen einsetzt.

Vorzugsweise werden nach einer seitens der ersten und/oder zweiten Kommunikationseinrichtung die Datenpakete auf Vorhandensein von zumindest einem die Authentisierung ermöglichenden Paket untersucht und bei Ausbleiben einer Detektion eines Authentisierung ermöglichenden Pakets die Kommunikationsverbindung beendet. Diese Weiterbildung zeichnet sich durch eine einfache Implementierung aus.

Ergänzend ist es dabei von Vorteil, wenn die Untersuchung innerhalb einer definierten ersten Zeitspanne erfolgt und das Ausbleiben der Detektion durch Ablauf der Zeitspanne bestimmt wird. Hierdurch sind definierte Zustände und die Terminiertheit bei der Durchführung des Verfahrens gewährleistet.

Alternativ oder ergänzend wird bei Ausbleiben des die Authentisierung ermöglichenden Pakets seitens empfangender Kommunikationseinrichtung von der sendenden Kommunikationseinrichtung das die Authentisierung ermöglichende Paket angefordert und bei Ausbleiben des angeforderten Pakets die Kommunikationsverbindung beendet. Diese Weiterbildung hat den Vorteil, dass es versehentliche Abbrüche aufgrund von zu kurz gewählten Zeitfenstern bzw. zu langer Übermittlungszeiten der Pakete weitestgehend verhindert, da durch ein explizites Abfragen gewissermaßen der sendenden Einrichtung eine zweite Chance gegeben wird.

Vorzugsweise wird das die Authentisierung ermöglichende Paket als ein Paket mit zumindest einem Kopffeld mit zumindest einer diese Funktion kennzeichnenden Information eingebettet, so dass es ein einfaches Detektieren innerhalb der Nutzdaten ermöglicht. Ferner bietet ein Kopffeld erweiterte Möglichkeiten der Überprüfung des Pakets.

Besonders vorteilhaft ist es, wenn im Verlauf einer Kommunikationsverbindung zwischen der ersten Kommunikationseinrichtung und der zweiten Kommunikationseinrichtung ein Einbetten zu festgelegten Zeitpunkten erneut erfolgt. Hierdurch wird gewährleistet, dass sich ein Angreifer auch nicht zu einem späteren Zeitpunkt zwischen die Kommunikationspartner schalten und als die jeweils andere Kommunikationseinrichtung ausgeben kann.

Eine einfache Implementierung ist dabei dadurch gegeben, dass die Festlegung derart erfolgt, dass das erneute Einbetten in gleichen Zeitabständen durchgeführt wird.

Alternativ erfolgt die Festlegung derart, dass das erneute Einbetten in Zeitabständen unterschiedlicher insbesondere pseudozufällig erzeugter Dauer durchgeführt wird. Hierdurch wird möglichen Angreifern erschwert, ein, durch erfolgreiches Ausspionieren der Nutzdaten, Authentisierungspaket ohne weiteres zu verwenden, da zusätzlich zum Paket noch das den Kommunikationspartnern gemeinsame Wissen über den Pseudozufallsalgorithmus erforderlich ist.

Wird dem die Authentisierung ermöglichenden Paket zur Authentisierung zumindest eine Information beigefügt, wobei bei jedem erneuten Einbetten eine sich von der vorhergehenden Information unterscheidende Information eingefügt wird, so wird es einem Angreifer zusätzlich erschwert, durch einfaches Abfangen eines Authentisierungspakets, die dem Abfangszeitpunkt folgende Kommunikation zu korrumpieren, da ihm das Wissen über die sich ändernde Information fehlt.

Besonders erschwert wird dies dabei, wenn zur Authentisierung dem die Authentisierung ermöglichenden Paket zumindest ein Verschlüsselungsschlüsselkennzeichen, Passwort und/oder mit einem insbesondere "PKI"-Schlüssel verschlüsselte Information beigefügt wird.

Die erfindungsgemäße Anordnung zum Übertragen von insbesondere Echtzeitanwendungen realisierenden Nutzdaten zwischen zumindest einer ersten Kommunikationseinrichtung und zumindest einer zweiten Kommunikationseinrichtung, die derart ausgestaltet ist, dass die Nutzdaten während einer Kommunikationsverbindung als Datenpakete übertragen werden, weist Mittel zur Durchführung des Verfahrens nach einem der vorgenannten Ausgestaltungen auf und stellt damit vorteilhaft die notwendige körperliche Grundlage zur Durchführung des Verfahrens zur Verfügung.

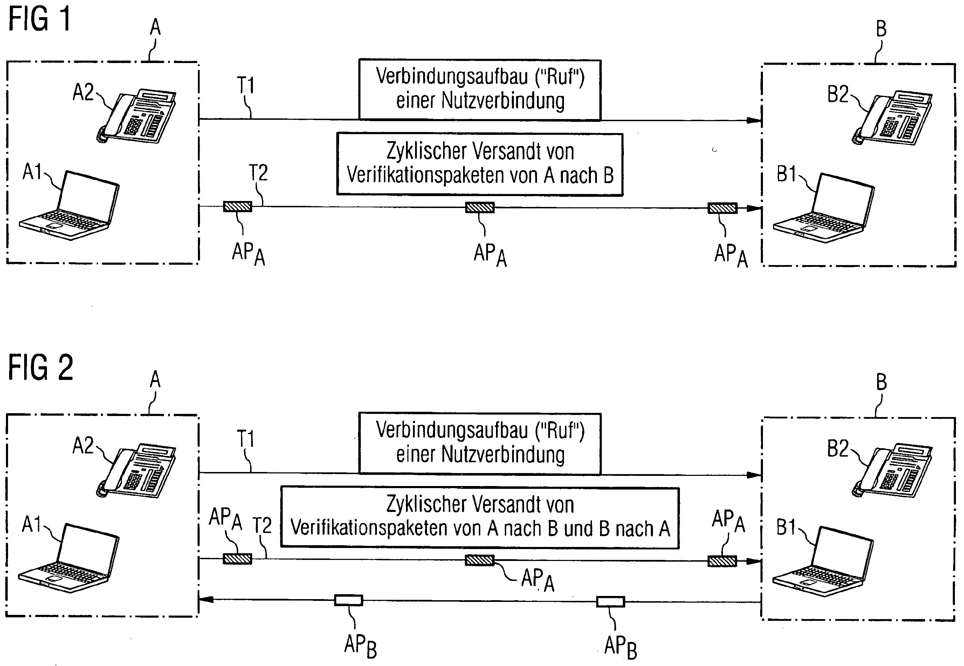

Weitere Einzelheiten der Erfindung sowie Vorteile werden ausgehend von einem in der Figur 1 dargestellten ersten Ausführungsbeispiel sowie anhand eines in der Figur 2 dargestellten zweiten Ausführungsbeispiels der Erfindung näher erläutert.

Dabei zeigt
- Figur 1: schematisch ein unidirektionales Einbetten von Authentisierungspaketen in Nutzdatenpakete,
- Figur 2: schematisch ein bidirektionales Einbetten von Authentisierungspaketen in Nutzdatenpakete.

In Figur 1 ist ein erstes Ausführungsbeispiel der Erfindung dargestellt. Zu erkennen ist eine erste Kommunikationseinrichtung A; A1...A2 sowie eine zweite Kommunikationseinrichtung B; B1...B2, wobei des Weiteren zu sehen ist, dass prinzipiell die erfindungsgemäßen Kommunikationseinrichtungen in der Regel durch eine Datenverarbeitungseinrichtung, wie einen Personal Computer oder einen tragbaren Computer (Laptop, Notebook) A1; B1 mit einer entsprechenden VoIP-Software, oder einer speziellen VoIP-Hardware, wie einem VoIP-fähigen Telefon A2;B2, ausgestaltet sind.

Die Erfindung behandelt insbesondere den speziellen Angriff, dass nach dem Aufbau einer Nutzdatenverbindung ein von einem der Kommunikationseinrichtungen A; A1...A2; B; B1; B1...B3 abgehende Sprachdatenstrom eines Teilnehmers abgefangen und durch einen manipulierten Sprachdatenstrom, welcher beispielsweise von einem menschlichen oder elektronischen Sprachimitator erzeugt stammt, ersetzt wird.

Daher setzt das dargestellte Ausführungsbeispiel zu einem ersten Zeitpunkt T1 mit einem Verbindungsaufbau ein, welcher von der ersten Kommunikationseinrichtung A; A1..A2, beispielsweise durch einen in der Telefonie bekannten Ruf der zweiten Kommunikationseinrichtung B; B1...B2 ausgelöst wird.

Als Ergebnis dieses Rufs wird für das dargestellte Beispiel angenommen, dass eine Kommunikationsverbindung etabliert worden ist.

Es erfolgt daher ab einem zweiten Zeitpunkt T2 eine Übertragung von Nutzdaten, diese kann sowohl von der ersten Kommunikationseinrichtung A; A1..A2 zur zweiten Kommunikationseinrichtung B; B1...B2 als auch von der zweiten Kommunikationseinrichtung B; B1...B2 zur ersten Kommunikationseinrichtung A; A1..A2 erfolgen.

Bei dem dargestellten ersten Ausführungsbeispiel wird aber unabhängig davon, ob Nutzdaten in beide Kommunikationsrichtungen A; A1...A2; übertragen werden, lediglich ein Nutzdatenstrom von der ersten Kommunikationseinrichtung A; A1...A2 ausgesandt und auch nur in diesen Nutzdatenstrom erfindungsgemäß Authentisierungspakete AP_{A} in - nicht dargestellte Pakete - des Nutzdatenstroms eingebettet.

Denkbar ist es, einen derartigen Ansatz in Systemen bzw. bei Anwendungen einzusetzen, wo beispielsweise die zeitnahe Übermittlung von gesammelten Daten an eine auswertende Zentrale erfolgt, wie zum Beispiel bei einer Video- und/oder Audio Überwachung von Objekten durch Kameras bzw. Mikrofonen, welche mit einer Zentrale kommunizieren können.

Die bei der zweiten Kommunikationseinrichtung B; B1...B2 eintreffenden Authentisierungspakete werden dann entsprechend aus den jeweiligen Nutzdatenpaketen extrahiert und einer Überprüfung unterzogen.

Hierzu hat die zweite Kommunikationseinrichtung Kenntnis über die Gestalt der Authentisierungsinformation, in dem sie dem gleichen Algorithmus folgend die Information und/oder den Übertragungszeitpunkt herleitet oder die Information und/oder Zeitpunkte, beispielsweise als Zuordnungstabelle zugeordnet zu den zweiten Kommunikationseinrichtung bekannten Kommunikationseinrichtungen, gespeichert ist.

Abhängig vom Überprüfungsergebnis wird dann die Kommunikationsverbindung aufrechterhalten und die Nutzdaten ihrer bestimmungsgemäßen Verarbeitung zugeführt oder die Kommunikationseinrichtung gekappt bzw. die Nutzdaten verworfen oder einer Auswertung des Angriffs zugeführt.

In Figur 2 ist ein zweites Ausführungsbeispiel der Erfindung dargestellt. Die dargestellte Anordnung unterscheidet sich dabei nicht von der des ersten Ausführungsbeispiels, so dass die zum ersten Ausführungsbeispiel identischen Elemente mit den gleichen Bezugszeichen versehen sind, während die neu hinzutretenden Elemente des erfindungsgemäßen zweiten Ausführungsbeispiels neue Bezugszeichen erhalten.

Dargestellt ist somit wiederum die erste Kommunikationseinrichtung A; A1...A2 sowie die zweite Kommunikationseinrichtung B; B1...B2, die ebenfalls prinzipiell als eine Datenverarbeitungseinrichtung, wie ein Personal Computer oder ein tragbaren Computer (Laptop, Notebook) A1; B1 mit einer entsprechenden VoIP-Software, oder einer speziellen VoIP-Hardware, wie einem VoIP-fähigen Telefon A2; B2, ausgestaltet sind.

Auch hier wird zu dem ersten Zeitpunkt T1 seitens der ersten Kommunikationseinrichtung A; A1...A2 ein Ruf zum Einleiten einer Kommunikationsverbindung der zweiten Kommunikationseinrichtung B; B1...B2 durchgeführt.

Im Unterschied zum vorangegangenen Ausführungsbeispiel erfolgt bei dem vorliegenden Beispiel bei erfolgreichem Aufbau der Kommunikationsverbindung zwischen der ersten Kommunikationseinrichtung A; A1...A2 und der zweiten Kommunikationseinrichtung B; B1...B2 zu einem zweiten Zeitpunkt T2' nicht nur eine Übertragung von Nutzdatenpaketen in beide Richtungen, sondern auch das Einbetten von Authentisierungspaketen AP_{A}; AP_{B} sowohl von der ersten Kommunikationseinrichtung A; A1...A2, angedeutet durch schwarze Rechtecke AP_{A}, als auch der zweiten Kommunikationseinrichtung B; B1...B2, angedeutet durch die grauen Rechtecke AP_{B}, in die Nutzdatenpakete des jeweils von ihnen ausgehenden Nutzdatenstroms eingebettet.

Die dargestellten Beispiele beziehen sich zwar vordergründig auf ein eine VoIP bereitstellendes Szenario, die Erfindung ist aber keineswegs darauf beschränkt. Sie ist überall dort einsetzbar, wo echtzeitkritische Anwendungen Nutzdaten übertragen, sei es unidirektional (z.B.: Überwachung) oder bidirektional (Telekommunikation).

Zusammenfassend ist also anhand der beschriebenen Ausführungsbeispiele zu erkennen, dass sich ein Kern der Erfindung darin ergibt, dass in den Nutzdatenstrom in bestimmten regelmäßigen oder unregelmäßigen Zeitabständen Verifikationspakete zur Authentifizierung und Autorisierung eingebettet werden, wobei diese gemäß einer Weiterbildung im Paket-Header als solche gekennzeichnet sind und im Allgemeinen die Nutzdaten nicht beeinträchtigen.

Verschiedene standardisierte Verfahren bieten hierfür die Möglichkeit, solche im Header gekennzeichneten, sonst vor einer endgültigen Standardisierung des erfindungsgemäßen Verfahrens proprietären, Pakete zu definieren.

Diese Pakete können dabei bestimmte, den Sender betreffende Sicherheitsmerkmale wie beispielsweise Schlüsselkennzeichen, Passwörter, mit einem (PKI-)Schlüssel verschlüsselte Information oder Vergleichbares enthalten.

Wie beschrieben, überprüft der Empfänger den Empfang und den Inhalt der Pakete und kann beim Ausbleiben solcher Pakete oder bei nicht geeignetem Inhalt entsprechende Aktionen einleiten, beispielsweise explizit solche Pakete anfordern, oder die Verbindung abbrechen.

Vorteilhaft an dem erfindungsgemäßen Verfahren ist dabei auch, dass Router diese Pakete ohne weiteres durchrouten, da das beschriebene Verfahren keinen Einfluss auf der Ebene des Internet Protokolls hat.

Ferner hat es den Vorteil, dass andere Geräte, insbesondere Endgeräte bei Unkenntnis des definierten Pakettyps solche Pakete einfach verwerfen werden, so dass als Rückfallposition eine (ungesicherte) Kommunikation somit nach wie vor möglich sein wird.

Als Weiterbildung kann, um zu verhindern, dass solche Pakete abgefangen und durch Manipulierte ersetzt werden, der Inhalt der Pakete in einer nur den Partnern wohlbekannten Weise in pseudozufälligen oder determinierten definierten Zeitabständen verändert werden. Weitere Maßnahmen, welche solche auch als Replay-Attacken bekannte Angriffe abwehren, können in vorteilhafter als Weiterbildung der Erfindung ohne weiteres appliziert werden.

Ferner kann zusammenfassend festgestellt werden, dass gemäß der Erfindung die im Rahmen der Nutzverbindung (Payload) speziell gekennzeichneten Verifikationspakete erfindungsgemäß entweder unidirektional von der ersten Kommunikationseinrichtung A; A1...A2 zur zweiten Kommunikationseinrichtung B; B1...B2 gesendet werden, wobei dabei die zweite Kommunikationseinrichtung B; B1...B2 allein die Aufgabe hat, die Gültigkeit der Verifikationspakete zu überprüfen und ggf. auf ungültige oder ausbleibende Pakete wie vorstehend beschrieben zu reagieren, oder den Nachteil dieser Variante, nämlich dass die erste Kommunikationseinrichtung A; A1...A2 kein Wissen über die Authentizität von der zweiten Kommunikationseinrichtung B; B1...B2 hat, überwindend bidirektional senden, wobei in letzterer Variante, dann sowohl die erste Kommunikationseinrichtung A; A1..A2 als auch die zweite Kommunikationseinrichtung B; B1...B2 die Aufgabe haben, die Gültigkeit der Verifikationspakete der anderen Seite zu überprüfen und ggf. auf ungültige oder ausbleibende Pakete in der beschriebenen Art zu reagieren, so dass also eine gegenseitige Kontrolle realisiert ist.

Gemäß der Erfindung ist nicht notwendig, dass insbesondere ein Sprachdatenstrom permanent auf die Korrektheit und die Konsistenz von den Sprecher charakterisierenden Frequenzmustern oder Spracheigenheiten überprüft werden muss, denn die Erfindung bietet eine je nach Häufigkeit der Anwendung mehr oder weniger dichte Verifikation des Partners während des Nutzdatenaustauschs, die vollkommen ausreicht, um einen Angriff, insbesondere "Man in the Middle", mit hoher Wahrscheinlichkeit zu detektieren.

Im Vergleich zu aus dem Stand der Technik bekannten Verfahren, die eine Verifikation der Sprecher bei einer VoIP-Verbindung durchführen und hierbei durchweg nur beim Verbindungsaufbau, d.h. vor dem Austausch der eigentlichen Nutzdaten durchführen, wird mit dem erfindungsgemäßen Verfahren eine Lösung geschaffen, die eine einfache Realisierung eines Schutzes ermöglichen.

Dies erkennt man zum Beispiel gegenüber der aus dem Stand der Technik bekannten Abwehr des "Man-in-the-Middle" Problems erkennbar ist, bei vor bzw. beim Aufbau der Nutzdatenverbindung z.B. durch Austausch von Schlüsseldaten dafür gesorgt, dass zum einen die Partner authentifiziert und zum anderen die Nutzdaten verschlüsselt werden, denn diese sicherlich wirksame Methode hat den Nachteil, dass beide Partner eine ähnlich aufwändige technische Ausstattung besitzen müssen.

Die Erfindung bietet für den Fall, dass mindestens einer der Partner keine derartige technische Ausstattung besitzt, eine technisch weniger aufwändige aber dennoch während der Nutzdatenverbindung permanente Verifikation der Partner gewährleistende Lösung.

Sie hat zudem den Vorteil, dass sie rückwärts kompatibel zu bestehenden standardisierten Verfahren zum Austausch der Nutzdaten ist.

## Patentansprüche

1. Verfahren zum Übertragen von Nutzdaten, insbesondere Echtzeitanwendungen realisierenden Nutzdaten, zwischen zumindest einer ersten Kommunikationseinrichtung (A, A1, A2) und zumindest einer zweiten Kommunikationseinrichtung (B, B1, B2), wobei die Nutzdaten während einer Kommunikationsverbindung als Datenpakete in einem Nutzdatenstrom übertragen werden, **dadurch gekennzeichnet, dass** während der Kommunikationsverbindung zumindest seitens der ersten Kommunikationseinrichtung in zumindest eines der Datenpakete des Nutzdatenstroms in bestimmten regelmäßigen oder unregelmäßigen Zeitabständen ein Verifikationspaket (AP_{A}), das eine Authentisierung der ersten Kommunikationseinrichtung (A, A1, A2) ermöglicht, eingebettet wird.

2. Verfahren nach dem vorhergehenden Anspruch, **dadurch gekennzeichnet, dass** während der Kommunikationsverbindung zumindest seitens der zweiten Kommunikationseinrichtung in zumindest eines der Datenpakete des Nutzdatenstroms in bestimmten regelmäßigen oder unregelmäßigen Zeitabständen ein Verifikationspaket (AP_{B}), das eine Authentisierung der zweiten Kommunikationseinrichtung (B, B1, B2) ermöglicht, eingebettet wird.

3. Verfahren nach dem vorhergehenden Anspruch, **dadurch gekennzeichnet, dass** die erste Kommunikationseinrichtung (A, A1, A2) und/oder zweite Kommunikationseinrichtung (B, B1, B2) bei Empfang von Nutzdaten ein Versenden von die Authentisierung ermöglichenden Verifikationspaketen (AP_{A}, AP_{B}) anfordert.

4. Verfahren nach einem der beiden vorhergehenden Ansprüche, **dadurch gekennzeichnet, dass**
a) die erste Kommunikationseinrichtung (A, A1, A2) und/oder zweite Kommunikationseinrichtung (B, B1, B2) die Datenpakete auf Vorhandensein von zumindest einem die Authentisierung ermöglichenden Verifikationspaket (AP_{A}, AP_{B}) untersucht,
b) bei Ausbleiben einer Detektion eines die Authentisierung ermöglichenden Verifikationspakets (AP_{A}, AP_{B}) die Kommunikationsverbindung beendet wird.

5. Verfahren nach dem vorhergehenden Anspruch, **dadurch gekennzeichnet, dass**
a) die Untersuchung innerhalb einer definierten ersten Zeitspanne erfolgt,
b) das Ausbleiben der Detektion durch Ablauf der Zeitspanne bestimmt wird.

6. Verfahren nach einem der vorhergehenden Ansprüche, **dadurch gekennzeichnet, dass**
a) bei Ausbleiben des die Authentisierung ermöglichenden Verifikationspakets (AP_{A}, AP_{B}) seitens der ersten Kommunikationseinrichtung (A, A1, A2) und/oder zweiten Kommunikationseinrichtung (B, B1, B2) von der ersten Kommunikationseinrichtung (A, A1, A2) und/oder zweiten Kommunikationseinrichtung (B, B1, B2) das die Authentisierung ermöglichende Verifikationspaket (AP_{A}, AP_{B}) angefordert wird,
b) bei Ausbleiben des angeforderten Verifikationspakets (AP_{A}, AP_{B}) die Kommunikationsverbindung beendet wird.

7. Verfahren nach einem der vorhergehenden Ansprüche, **dadurch gekennzeichnet, dass** das die Authentisierung ermöglichende Verifikationspaket (AP_{A}, AP_{B}) als ein Paket mit zumindest einem Kopffeld mit zumindest einer diese Funktion kennzeichnenden Information eingebettet wird.

8. Verfahren nach einem der vorhergehenden Ansprüche, **dadurch gekennzeichnet, dass** im Verlauf einer Kommunikationsverbindung zwischen der ersten Kommunikationseinrichtung (A, A1, A2) und der zweiten Kommunikationseinrichtung (B, B1, B2) ein Einbetten zu festgelegten Zeitpunkten erneut erfolgt.

9. Verfahren nach dem vorhergehenden Anspruch, **dadurch gekennzeichnet, dass** die Festlegung derart erfolgt, dass das erneute Einbetten in gleichen Zeitabständen durchgeführt wird.

10. Verfahren nach Anspruch 8, **dadurch gekennzeichnet, dass** die Festlegung derart erfolgt, dass das erneute Einbetten in Zeitabständen unterschiedlicher insbesondere pseudozufällig erzeugter Dauer durchgeführt wird.

11. Verfahren nach einem der vorhergehenden Ansprüche, **dadurch gekennzeichnet, dass**
a) dem die Authentisierung ermöglichenden Verifikationspaket (AP_{A}, AP_{B}) zur Authentisierung zumindest eine Information beigefügt wird,
b) bei jedem erneuten Einbetten zumindest eine sich von der vorhergehenden Information unterscheidende Information eingefügt wird.

12. Verfahren nach einem der vorhergehenden Ansprüche, **dadurch gekennzeichnet, dass** zur Authentisierung dem die Authentisierung ermöglichenden Verifikationspaket (AP_{A}, AP_{B}) zumindest-ein Verschlüsselungsschlüsselkennzeichen, Passwort und/oder mit einem, insbesondere "PKI"-Schlüssel verschlüsselte Information beigefügt wird.

13. Anordnung zum Übertragen von Nutzdaten, insbesondere Echtzeitanwendungen realisierenden Nutzdaten, zwischen zumindest einer ersten Kommunikationseinrichtung (A, A1, A2) und zumindest einer zweiten Kommunikationseinrichtung (B, B1, B2), die derart ausgestaltet ist, dass die Nutzdaten während einer Kommunikationsverbindung als Datenpakete übertragen werden, **gekennzeichnet durch** Mittel zur Durchführung des Verfahrens nach einem der vorhergehenden Ansprüche.

## Claims

1. A method for transmitting user data, in particular user data implementing real-time uses, between at least one first communication device (A, A1, A2) and at least one second communication device (B, B1, B2), wherein the user data is transmitted during a communication connection as data packets in a user data stream, **characterized in that**, during the communication connection, a verification packet (AP_{A}) which enables an authentication of the first communication device (A, A1, A2) is embedded at certain regular or irregular time intervals in at least one of the data packets of the user data stream by at least the first communication device.

2. The method according to the preceding claim, **characterized in that**, during the communication connection, a verification packet (AP_{B}) which enables an authentication of the second communication device (B, B1, B2) is embedded at certain regular or irregular time intervals in at least one of the data packets of the user data stream by at least the second communication device.

3. The method according to the preceding claim, **characterized in that**, if user data is received, the first communication device (A, A1, A2) and/or second communication device (B, B1, B2) request/s a transmission of the verification packets (AP_{A}, AP_{B}) enabling the authentication.

4. The method according to any one of the two preceding claims, **characterized in that**
a) the first communication device (A, A1, A2) and/or second communication device (B, B1, B2) examine/s the data packets for the presence of at least one verification packet (AP_{A}, AP_{B}) enabling the authentication,
b) in the absence of a detection of a verification packet (AP_{A}, AP_{B}) enabling the authentication, the communication connection is terminated.

5. The method according to the preceding claim, **characterized in that**
a) the investigation occurs within a defined first time span,
b) the absence of the detection is determined from the expiration of the time span.

6. The method according to any one of the preceding claims, **characterized in that**
a) in the absence of the verification packet (AP_{A}, AP_{B}) enabling the authentication from the first communication device (A, A1, A2) and/or second communication device (B, B1, B2), the verification packet (AP_{A}, AP_{B}) enabling the authentication is requested by the first communication device (A, A1, A2) and/or by second communication device (B, B1, B2),
b) in the absence of the requested verification packet (AP_{A}, AP_{B}), the communication connection is terminated.

7. The method according to any one of the preceding claims, **characterized in that** the verification packet (AP_{A}, AP_{B}) enabling the authentication is embedded as a packet with at least one header field with at least one information item characterizing this function.

8. The method according to any one of the preceding claims, **characterized in that**, during the course of a communication connection between the first communication device (A, A1, A2) and the second communication device (B, B1, B2), an embedding occurs again at determined points in time.

9. The method according to the preceding claim, **characterized in that** the determination occurs in such a manner that the repeated embedding is carried out at equal time intervals.

10. The method according to claim 8, **characterized in that** the determination occurs in such a manner that the repeated embedding is carried out at time intervals of different, in particular pseudo-randomized, duration.

11. The method according to any one of the preceding claims, **characterized in that**
a) for the authentication, at least one information item is added to the verification packet (AP_{A}, AP_{B}) enabling the authentication,
b) for each repeated embedding, at least one information item that differs from the preceding information is inserted.

12. The method according to any one of the preceding claims, **characterized in that**, for authentication, an encoding key indicator, password, and/or information encoded with a key, in particular "PKI" key, is added to the verification packet (AP_{A}, AP_{B}) enabling the authentication.

13. An arrangement for the transmission of user data, in particular user data implementing real-time uses, between at least one first communication device (A, A1, A2) and at least one second communication device (B, B1, B2), which is designed in such a manner that the user data is transmitted during a communication connection as data packets, **characterized by** means for carrying out the method according to any one of the preceding claims.

## Revendications

1. Procédé de transmission de données utiles, en particulier de données utiles réalisant des applications en temps réel, entre au moins un premier dispositif de communication (A, A1, A2) et au moins un second dispositif de communication (B, B1, B2), dans lequel les données utiles sont transmises pendant une liaison de communication comme paquets de données dans un courant de données utiles, **caractérisé en ce qu'**un paquet de vérification (AP_{A}) qui permet une authentification du premier dispositif de communication (A, A1, A2), est intégré pendant la liaison de communication au moins du côté du premier dispositif de communication dans au moins un des paquets de données du courant de données utiles dans des intervalles de temps réguliers ou irréguliers déterminés.

2. Procédé selon la revendication précédente, **caractérisé en ce qu'**un paquet de vérification (AP_{B}) qui permet une authentification du second dispositif de communication (B, B1, B2) est intégré pendant la liaison de communication au moins du côté du second dispositif de communication dans au moins un des paquets de données du courant de données utiles dans des intervalles de temps réguliers ou irréguliers déterminés.

3. Procédé selon la revendication précédente, **caractérisé en ce que** le premier dispositif de communication (A, A1, A2) et/ou le second dispositif de communication (B, B1, B2) exige lors de la réception de données utiles un envoi des paquets de vérification (AP_{A}, AP_{B}) permettant l'authentification.

4. Procédé selon l'une des deux revendications précédentes, **caractérisé en ce que**
a) le premier dispositif de communication (A, A1, A2) et/ou le second dispositif de communication (B, B1, B2) examine les paquets de données quant à la présence d'au moins un paquet de vérification (AP_{A}, AP_{B}) permettant l'authentification,
b) en l'absence d'une détection d'un paquet de vérification (AP_{A}, AP_{B}) permettant l'authentification, la liaison de communication est terminée.

5. Procédé selon la revendication précédente, **caractérisé en ce que**
a) l'examen est effectué dans un premier intervalle de temps défini,
b) l'absence de la détection est déterminée par expiration de l'intervalle de temps.

6. Procédé selon l'une quelconque des revendications précédentes, **caractérisé en ce que**
a) en l'absence du paquet de vérification permettant l'authentification (AP_{A}, AP_{B}) du côté du premier dispositif de communication (A, A1, A2) et/ou du second dispositif de communication (B, B1, B2), le paquet de vérification (AP_{A}, AP_{B}) permettant l'authentification est exigé par le premier dispositif de communication (A, A1, A2) et/ou le second dispositif de communication (B, B1, B2),
b) en l'absence du paquet de vérification exigé (AP_{A}, AP_{B}) la liaison de communication est terminée.

7. Procédé selon l'une quelconque des revendications précédentes, **caractérisé en ce que** le paquet de vérification (AP_{A}, AP_{B}) permettant l'authentification est intégré comme un paquet avec au moins un champ d'en-tête avec au moins une information caractérisant cette fonction.

8. Procédé selon l'une quelconque des revendications précédentes, **caractérisé en ce qu'**au cours d'une liaison de communication entre le premier dispositif de communication (A, A1, A2) et le second dispositif de communication (B, B1, B2), une intégration est de nouveau effectuée à des moments déterminés.

9. Procédé selon la revendication précédente, **caractérisé en ce que** la détermination est effectuée de telle manière que la nouvelle intégration soit réalisée dans des intervalles de temps identiques.

10. Procédé selon la revendication 8, **caractérisé en ce que** la détermination est effectuée de telle manière que la nouvelle intégration soit réalisée dans des intervalles de temps de différente durée générée en particulier de manière pseudo-aléatoire.

11. Procédé selon l'une quelconque des revendications précédentes, **caractérisé en ce que**
a) au moins une information est ajoutée au paquet de vérification (AP_{A}, AP_{B}) permettant l'authentification pour l'authentification,
b) pour chaque nouvelle intégration, au moins une information différente de l'information précédente est insérée.

12. Procédé selon l'une quelconque des revendications précédentes, **caractérisé en ce que** pour l'authentification, au moins une caractéristique de code de cryptage, un mot de passe et/ou une information cryptée avec un code en particulier « PKI » est ajoutée au paquet de vérification (AP_{A}, AP_{B}) permettant l'authentification.

13. Agencement de transmission de données utiles, en particulier de données utiles réalisant des applications en temps réel, entre au moins un premier dispositif de communication (A, A1, A2) et au moins un second dispositif de communication (B, B1, B2) qui est configuré de telle manière que les données utiles soient transmises pendant une liaison de communication comme paquets de données, **caractérisé par** des moyens pour la mise en oeuvre du procédé selon l'une quelconque des revendications précédentes.
